## Europäisches Patentamt
## European Patent Office
## Office européen des brevets

(19)

(11) Veröffentlichungsnummer: **0 115 573**
**B1**

(12) # EUROPÄISCHE PATENTSCHRIFT

(45) Veröffentlichungstag der Patentschrift:
11.05.88

(51) Int. Cl.⁴: **G 01 N 21/89**, G 02 B 27/46

(21) Anmeldenummer: 83110933.5

(22) Anmeldetag: 02.11.83

(54) Verfahren und Vorrichtung zur automatischen Erkennung von Fehlern in Geweben und ähnlichen textilen Flächengebilden.

(30) Priorität: 03.02.83 CH 624/83

(43) Veröffentlichungstag der Anmeldung:
15.08.84 Patentblatt 84/33

(45) Bekanntmachung des Hinweises auf die Patenterteilung:
11.05.88 Patentblatt 88/19

(84) Benannte Vertragsstaaten:
BE FR GB IT NL

(56) Entgegenhaltungen:
DD - A - 44 938
DE - A - 3 212 438
DE - B - 1 938 083
US - A - 3 783 296

APPLIED OPTICS, Band 20, Nr. 9, 1. Mai 1981, New York, USA; A. IWAMOTO et al. "Defect-type discriminating optical system", Seiten 1724-1726
IBM JOURNAL OF RESEARCH DEVELOPMENT, Band 17, Nr. 6, November 1973; A.L. FLAMHOLZ et al. "Dimensional Measurement and Defect Detection Using Spatial Filtering", Seiten 509-518
PROCEEDINGS OF THE IEEE, Band 65, Nr. 1, Januar 1977; M.A. MONAHAN et al. "Incoherent Optical Correlators", Seiten 121-129

(73) Patentinhaber: ZELLWEGER USTER AG, Wilstrasse 11,
CH-8610 Uster (CH)

(72) Erfinder: Leuenberger, Rolf, Schulhaus,
CH-8330 Pfäffikon (CH)
Erfinder: Hunziker, Christian, Langenmattstrasse 38,
CH-8617 Mönchaltorf (CH)

(74) Vertreter: Dipl.-Phys.Dr. Manitz Dipl.-Ing., Dipl.-Wirtsch.
Finsterwald Dipl.-Chem.Dr. Heyn Dipl.-Phys. Rotermund
Morgan, B.Sc.(Phys.), Robert-Koch-Strasse 1,
D-8000 München 22 (DE)

(56) Entgegenhaltungen: (Fortsetzung)
IEEE TRANSACTIONS ON COMPUTERS, Band C-26, Nr. 10, Oktober 1977; W. FREI et al. "Fast Boundary Detection : A Generalization and a New Algorithm", Seiten 988-998

**Beschreibung**

Die Erfindung betrifft ein Verfahren zur automatischen Erkennung von Fehlern in Geweben und ähnlichen textilen Flächengebilden unter Auswertung von Leuchtstärkewerten zweier nebeneinanderliegender, aufeinanderfolgend abgetasteter, zueinander paralleler Bildzeilen mit nachfolgendem Vergleich von Leuchtstärkewerten, sowie eine Vorrichtung zur Durchführung dieses Verfahrens.

Ein Verfahren dieser Art ist aus der DE-A-3 212 438, veröffentlicht am 13. 10. 1983, bekannt. Bei diesen bekannten Verfahren wird eine laufende Warenbahn periodisch quer zur Längsrichtung mittels eines Fahrstrahls abgetastet. Das von der Bahn zurückgeworfene und/oder durchgelassene Abtastlicht wird mittels mehrerer unmittelbar nebeneinander angeordneter Lichtleitstäbe erfasst. Wenn sich ein Fehler gleichzeitig auf mehrere der nebeneinander angeordneten Lichtleitstäbe auswirkt, erfolgt in einer Auswerteelektronik eine Signalgabe.

Die Anmelderin hat unter Bezugnahme auf jene DE-A-3 212 438 ihr Patentbegehren freiwillig beschränkt.

In der DD-A-44 938 ist ein Verfahren zur photoelektrischen Messung des Verzugs von Geweben beschrieben, bei dem zur Feststellung der Schräglage der Schussfäden zwei Spaltblenden vorgesehen sind, die jeweils gegenüber der Sollage in unterschiedlicher Richtung eine Abweichung um einen bestimmten Winkelbetrag aufweisen. Weicht die Schussfadenlage von der Sollage ab, so steigt die Modulation an der einen Spaltblende an, während sie an der anderen absinkt. Entsprechend ändern sich die zugeordneten Photowechselspannungen. Die Differenz der gleichgerichteten Photowechselspannungen wird als Mass für die jeweilige Schräglage der Schussfäden herangezogen. Um eine möglichst grosse Modulation zu erhalten, soll die Spaltbreite hierbei etwa gleich der Fadenstärke sein. Dieses bekannte Verfahren liefert zwar bei der Bestimmung der Schräglage der Schussfäden brauchbare Ergebnisse, sie ist jedoch nicht geeignet zur Erfassung lokaler Abweichungen in der Gewebebahn.

In der IEEE Trans. on Comp., Bd. C-26, Nr. 10, Okt. 1977, S. 988–998 sind digitale Bildverarbeitungsverfahren und insbesondere digitale Raumfilterungsverfahren beschrieben, bei denen zur Bestimmung von jeweiligen Grenzübergängen die zu überwachenden Bildausschnitte in einzelne Sektoren unterteilt sind, die unterschiedlich gewichtet werden.

Aufgabe der Erfindung ist es, ein Verfahren der eingangs genannten Art in der Weise auszubilden, dass eine besonders feinfühlige Unterscheidung zwischen der als normal empfundenen globalen Textur eines Objektes und den als fehlerhaft empfundenen lokalen Abweichungen erreicht und eine besonders hohe Empfindlichkeit bezüglich Kanten und Linien erzielt wird.

Gelöst wird diese Aufgabe nach der Erfindung dadurch, dass die Mittelwerte der Leuchtstärken der nebeneinanderliegenden Bildzeilen erfasst und ein die jeweilige Differenz der Leuchtstärkemittelwerte darstellendes Signal gebildet und mit einem dem charakteristischen Mittelwert der abgetasteten Warenbahn nachgeführten Schwellensignal verglichen wird, so dass in Abhängigkeit von diesem Vergleich ein binäres Schwarz-Weiss-Bild der Warenbahn erzeugt wird.

Durch die laufende Mittelwertbildung und den Vergleich eines ständig gebildeten Differenzsignals mit einem charakteristischen Mittelwert der abgetasteten Warenbahn wird eine überraschend sichere und exakte Erkennung von Fehlern in der jeweiligen Warenbahn erreicht.

Bei dem erfindungsgemässen Verfahren werden Fehler in der Warenbahn anhand ihrer Kanten bzw. Linien erkannt. Dazu ist zu bemerken, dass auch das menschliche Auge, das als Vergleich zur Beurteilung von Gewebefehlern berücksichtigt werden muss, ebenfalls eine spezifische Empfindlichkeit auf Kanten bzw. Linien aufweist (sogenannte Phasenempfindlichkeit).

Verfahren zur Detektion von Kanten- bzw. Linienelementen verlangen eine zweidimensionale Bearbeitung des Abbildes der Warenoberfläche, was einer sogenannten Bildfilterung entspricht.

Die in den Ansprüchen formulierte Bildfilterung mittels der beschriebenen Doppelschlitzmaske kann grundsätzlich auf zwei verschiedene Arten realisiert werden:

1. Durch inkohärent-optische Filterung, wie sie aus anderen Anwendungsgebieten bekannt wurde. Diese Verfahren sind beispielsweise publiziert in:

G.L. Rodgers, «Non Coherent Optical Processing», John Wiley, New York, 1977,

S.H. Lee, Editor, «Optical Information Processing», Topics in applied physics; Springer, Vol. 23 and 48,

M.A. Monahan et al., in IEEE Proc. Vol. 65 (1977) pp. 121–129.

Ein bedeutender Nachteil der inkohärent optischen Filterung besteht darin, dass im allgemeinen Fall negative Gewichtungen in der Maskenfunktion nur ungenügend gelöst werden können.

Die Einfachheit der vorgeschlagenen Filtermaske erlaubt es aber, die vorzeichenrichtige Gewichtung mittels getrennter Sensoren vorzunehmen.

2. In neuerer Zeit wird vermehrt zur digitalen Bildverarbeitung übergegangen, wo geeignete Elemente in Form von preisgünstigen schnellen Prozessoren und CCD-Sensoren zur Verfügung stehen. Die digitale Bildverarbeitung ist flexibel, genau und robust, da keine mechanischen Abtastvorrichtungen (Scanner) erforderlich sind. Diese sogenannte digitale Raumfilterung ist offenbart in

A. Rosenfeld und A.C. Kak, «Digital Picture Processing», Academis Press, New York, 1976,

W.K. Pratt, «Digital Image Processing», John Wiley & Sons, New York, 1978,

W. Frei und Chung-Ching Chen, in IEEE Trans on Computers, Oct. 1977: «Fast Boundry Detection».

Auch die normale, fehlerfreie Oberflächenstruktur einer textilen Warenbahn kann sich aus Linien-und Kantenelementen zusammensetzen. Die Kantendetektionsprozesse liefern daher laufend Ausgangswerte, aus denen mittlere, warenspezifische Bezugsgrössen gebildet werden können, die ein Mass für die normale Oberflächenstruktur abgeben.

Kanten- und Linienelemente von Fehlern in der Warenbahn unterscheiden sich aber in ihren Ausdehnungen und/oder Kontraststärken signifikant von der Oberflächenstruktur. Ein fortlaufender Vergleich der gefundenen Kanten- und Linienelemente mit den genannten warenspezifischen Bezugsgrössen erlaubt die sichere Erkennung von Fehlern in der Warenbahn.

Die grosse Kanten- bzw. Linienempfindlichkeit geeigneter Kantendetektionsverfahren und ihre Unempfindlichkeit gegenüber anderen Strukturelementen (z.B. Körnigkeit) erlauben das Erkennen von Gewebefehlern in der Grösse einzelner Fäden, auch wenn das Filtersystem selber eine geringere Auflösung aufweist. Die Auflösung des Filtersystems wird soweit reduziert, dass störende Signalanteile hoher Raumfrequenzen unterdrückt werden. Diese als optische Tiefpassfilterung zu bezeichnende Herabsetzung der Auflösung erlaubt bei der digital-elektronischen Realisierung eine Reduktion der Anzahl Sensorelemente und kann deshalb zu besonders wirtschaftlichen Lösungen führen.

Ein besonderer Vorteil der Kantendetektionsverfahren besteht darin, dass eine Möglichkeit vorliegt, Kanten- bzw. Linienelemente selektiv nach ihrer Richtung und Länge zu unterscheiden. Denn durch geeignete Wahl der Filtermasken können Richtung und Empfindlichkeit der Filter bestimmt werden. Im Regelfall ist es sinnvoll, verschiedene Filterstufen parallel zu betreiben, wozu bei der digital-elektronischen Lösung aber nur ein einziges unveränderliches Sensorsystem nötig ist. Die Charakteristika der Filter können in diesem Fall durch elektronische Schaltungen bzw. Programmierung sehr flexibel bestimmt werden. Daher ist das erfindungsgemässe Verfahren besonders für die Anwendung moderner Technologien mit schnellen Prozessoren geeignet.

Die für das erfindungsgemässe Verfahren eingesetzte Bildfilterung und Schwellwertbildung besteht im wesentlichen darin, dass die laufend gewonnenen Kanten- oder Linienelemente zunächst dahin untersucht werden, ob sie sich signifikant von der normalen Gewebestruktur abheben. Solange keine solche Kanten- bzw. Linienelemente festgestellt werden, liefern die genannten Prozesse keine Signale. Erst wenn deutliche Kanten- oder Linienelemente auftreten, werden die entsprechenden Signale gespeichert und in einem nachgeschalteten Prozessor analysiert.

Das Ergebnis dieser Analyse zeigt Fehler in der Warenbahn auf. Da das Auftreten von Fehlern in der Warenbahn als ein statistisch seltenes Ereignis betrachtet werden kann, steht dem nachgeschalteten Prozessor ein hinreichend langes Zeitintervall zur Verfügung, um die Analyse mit einer Geschwindigkeit ablaufen zu lassen, für die ein relativ langsamer und entsprechend preisgünstiger Prozessor ausreicht.

Ausführungsformen einer Vorrichtung zur Durchführung des Verfahrens nach der Erfindung sind in Anspruch 2 und den davon abhängigen Ansprüchen 3 bis 9 angegeben.

Anhand der Beschreibung und der Figuren wird das Verfahren sowie eine Vorrichtung mittels Ausführungsbeispielen erläutert. Dabei zeigt

Fig. 1 eine fotografische Wiedergabe eines Gewebestückes,

Fig. 2 ein bekanntes optisches Raumfilter mit einfacher Schlitzblende,

Fig. 3 ein mit einer einfachen Schlitzblende erzieltes Grauwertbild eines Gewebefehlers,

Fig. 4 ein aus dem Grauwertbild nach Fig. 3 abgeleitetes Schwarz-weiss-Bild,

Fig. 5 ein optisches Raumfilter gemäss Fig. 2 mit dazwischengeschalteter Differenzstufe, das nicht die Erfindung betrifft,

Fig. 6 ein Bild einer Gewebestruktur, abgeleitet vom Signalfluss der Fig. 5,

Fig. 7 ein weiteres Bild einer Gewebestruktur nach Durchlaufen des Raumfilters der Fig. 5,

Fig. 8 ein optisches Raumfilter mit Doppelschlitzblende gemäss der Erfindung,

Fig. 9 ein mit einer Doppelschlitzblende gemäss Fig. 8 erzieltes Schwarz-weiss-Bild eines Gewebefehlers,

Fig. 10 eine mit mehreren Kanälen arbeitende Bildverarbeitung zur totalen Erfassung sämtlicher Gewebefehler mit horizontalen und vertikalen Komponenten,

Fig. 11 schematisch eine Anordnung zur digitalen Bildfilterung,

Fig. 12 ein Beispiel einer digitalen Realisierung einer horizontalen Filtermaske,

Fig. 13 ein Beispiel einer digitalen Realisierung einer vertikalen Filtermaske.

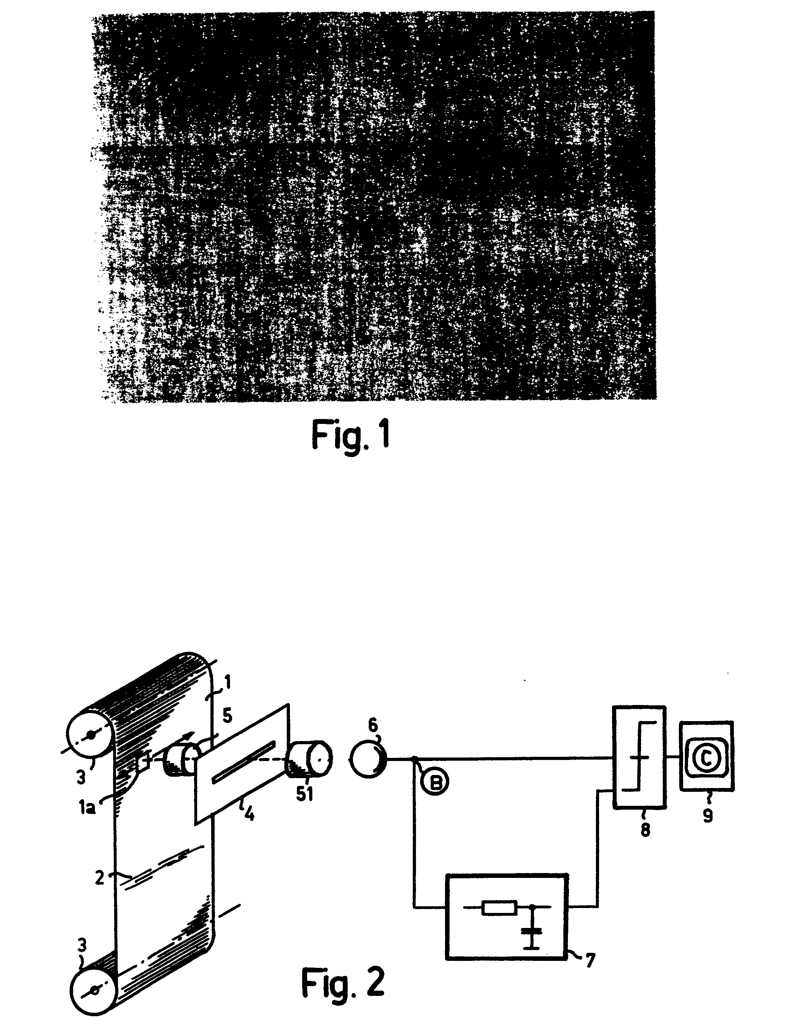

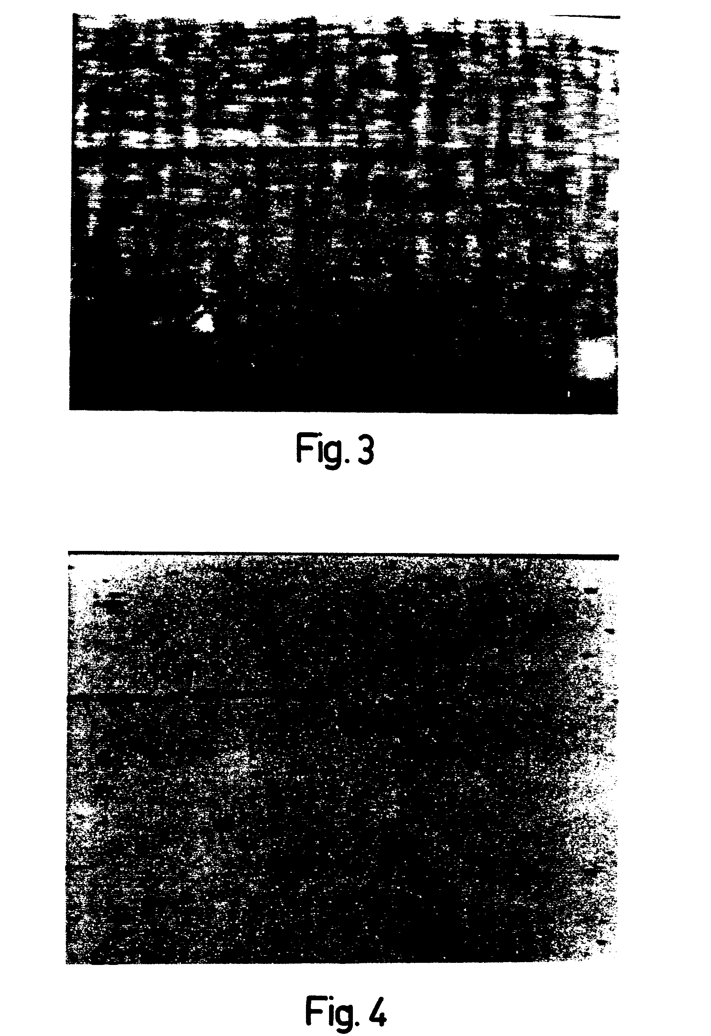

In Fig. 1 ist ein Ausschnitt aus einer Warenbahn 1 mit einem Gewebefehler 2 dargestellt. In Fig. 2 ist die Warenbahn 1 schematisch gezeigt, die über einen Abroll- und Aufrollmechanismus 3 läuft. Gegen die Warenbahn 1 gerichtet ist eine Abtast-Optik 5, welche die Warenbahn 1 zeilenweise abtastet (Scanner) und den momentanen Ausschnitt 1a aus der Warenbahn 1 auf die Filtermaske 4 abbildet. Die an der Filtermaske 4 entstehenden Leuchtstärkewerte werden über eine Integrationsoptik 51 mittels eines photoelektrischen Wandlers 6 in elektrische Signale umgeformt, die ein Grauwertbild gemäss Fig. 3 liefern, wie es am Punkt B abgenommen werden kann.

Werden nun diese Signale einerseits direkt, andererseits über einen Tiefpass 7 an eine Schwellwertstufe 8 gelegt und deren Ausgang einem ersten Monitor 9 zugeführt, so erscheint auf dessen Bildschirm C ein dem Grauwertbild gemäss Fig. 3 entsprechendes Schwarz-weiss-Bild (Fig. 4). Die Sicherheit der Gewebefehlererkennung ist in vielen Fällen noch ungenügend, da auch Flächenelemente der Gewebebahn als fehlerhaft dargestellt werden, deren Textur lediglich unwesentlich von der Umgebung abweicht.

Die Wirkung dieser Filtermaske 4 mit einem Schlitz entspricht den eingangs erwähnten, bekannten Verfahren der Mittelung von Leuchtstärkewerten über mehrere Einzelfäden.

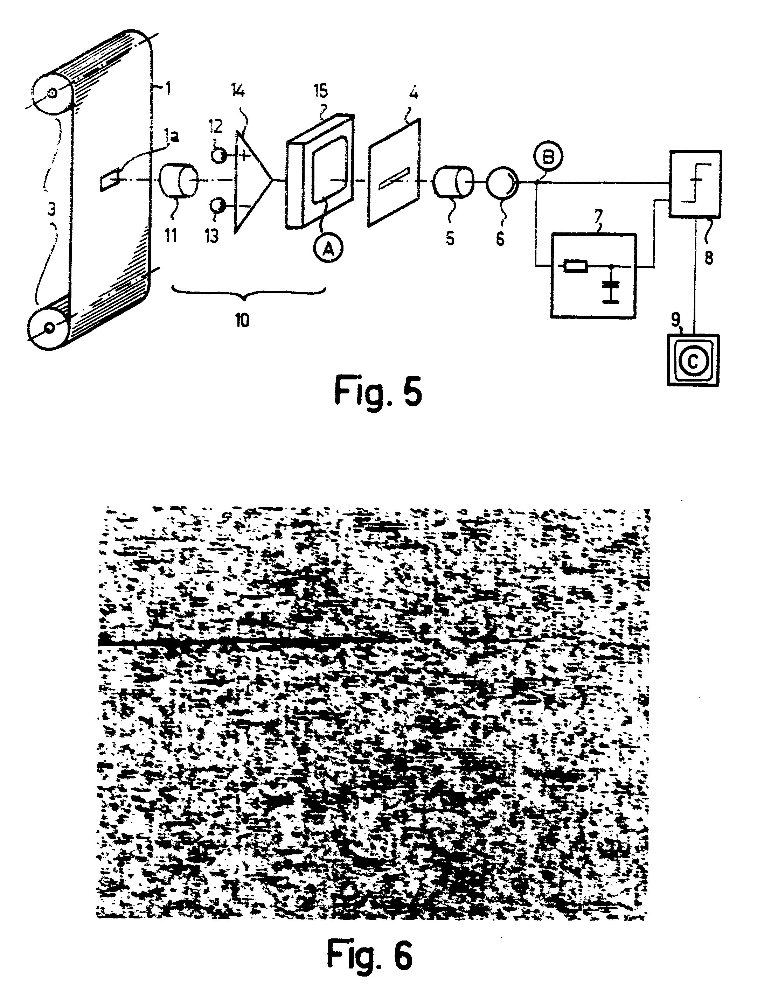

Wird nun zwischen die Filtermaske 4 und die Warenbahn 1 gemäss Fig. 5 eine Vorstufe mit einer Optik 11, zwei optisch-elektrischen Wandlern 12, 13, die an eine Differenzstufe 14 gelegt sind, sowie einem weiteren Monitor 15 angeordnet und die Filtermaske 4 – anstatt direkt auf die Warenbahn 1 – auf das Bild A des weiteren Monitors 15 gerichtet, so kann eine erhebliche Erhöhung der Erkennungseinrichtung im resultierenden Schwarz-weiss-Bild erreicht werden.

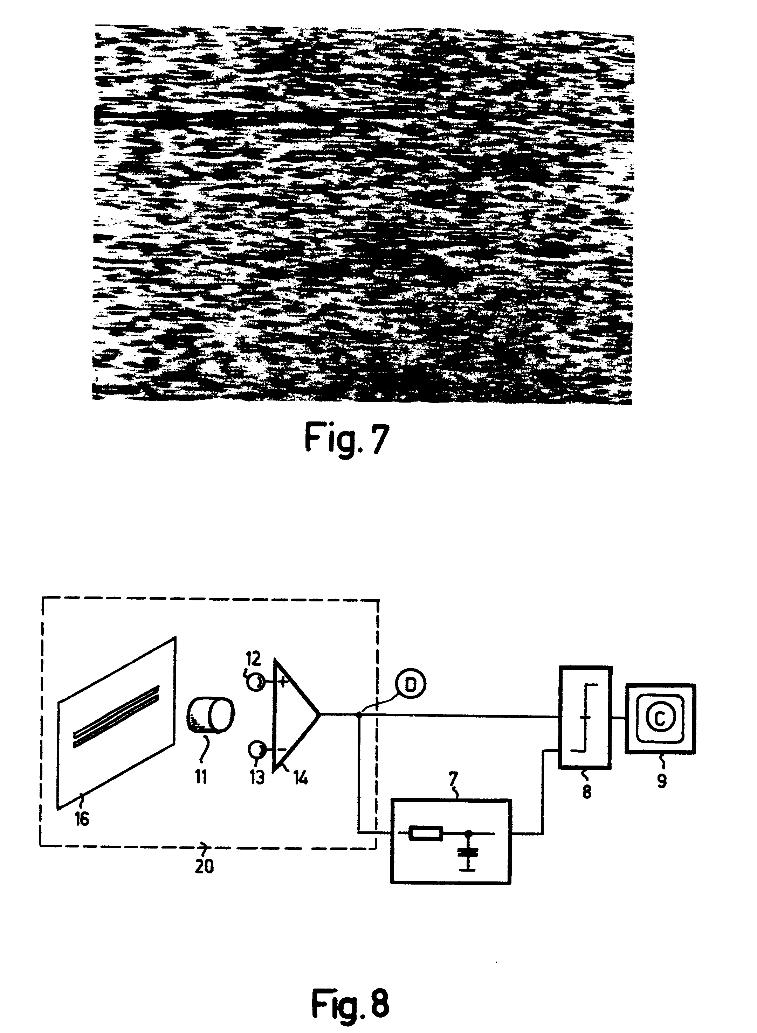

Die Zunahme der Erkennungssicherheit im resultierenden Schwarz-weiss-Bild ist mit den Fig. 6 und 7 nachgewiesen. Fig. 6 ist die Wiedergabe eines Gewebeausschnittes, wie er auf dem Bildschirm A des weiteren Monitors 15 (Fig. 5) erscheint. Fig. 7 zeigt das Bild desselben Gewebeausschnittes, das am Schaltungspunkt B der Anordnung gemäss Fig. 5 gewonnen wird.

Die Anordnung gemäss Fig. 5 lässt sich nun erheblich vereinfachen, indem – wie in Fig. 8 gezeigt – der Ausgang der Differenzstufe 14 direkt an die Schwellwertstufe 8 bzw. an den Tiefpass 7 gelegt wird. Zwischen die Warenbahn 1 und die Optik 11 wird als Maske eine Doppelschlitzblende 16 eingesetzt, womit auf der Warenbahn 1 zwei parallele Bildzeilen abgetastet werden, aus denen die Differenzen der Leuchtstärkewerte und deren Gewichtung gewonnnen werden. Diese Anordnung von Doppelschlitzblende als Filtermaske 16, Optik 11, optisch-elektrische Wandler 12, 13 und Differenzstufe 14 bildet das optische Raumfilter 20.

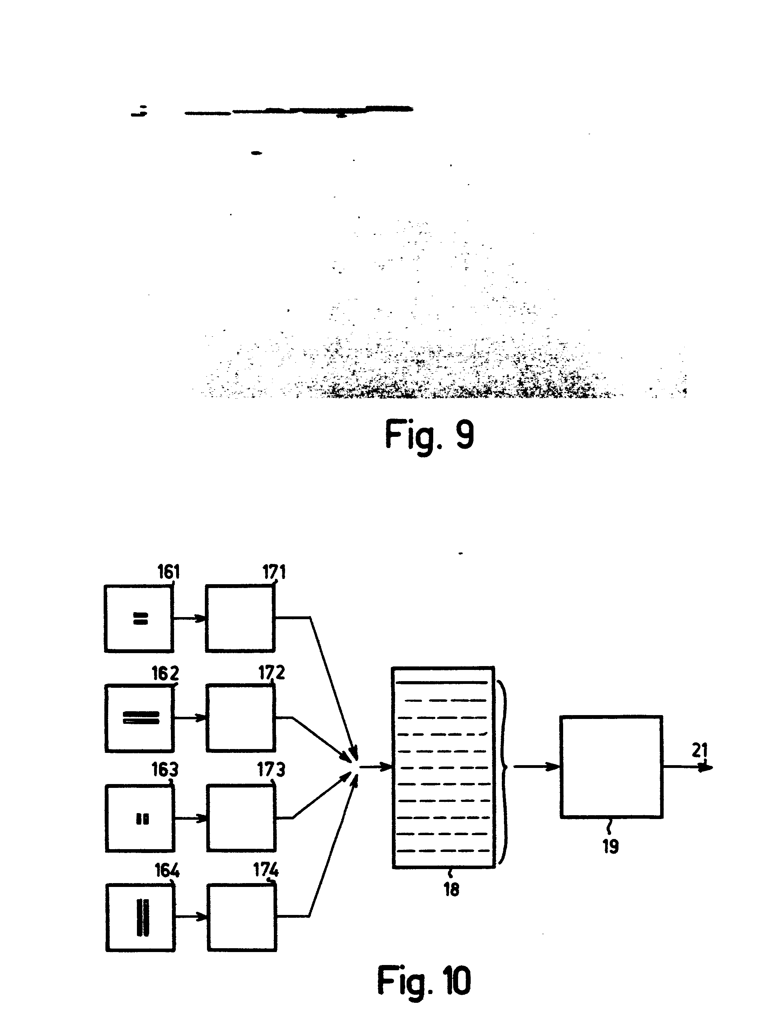

Ein mit dieser Doppelschlitzblende 16 gewonnenes Schwarz-weiss-Bild eines Gewebefehlers 2 auf dem Schirm C des Monitors 9 ist in Fig. 9 gezeigt. Die weitere Erhöhung der Erkennungssicherheit gegenüber dem in Fig. 4 gezeigten Bild ist erheblich.

Damit Gewebefehler beliebiger Art erkannt werden können, werden vorzugsweise mehrere Filterstufen parallel betrieben. Die einzelnen Stufen unterscheiden sich in der Länge und der Orientierung der Schlitze in der Filtermaske.

Dies ist beispielsweise in Fig. 10 gezeigt. Dabei sind schematisch je zwei horizontal und vertikal orientierte Doppelschlitzblenden 161, 162, 163, 164 als Filtermasken vorgesehen, von denen je zwei einen kurzen Doppelschlitz aufweisen. Die kurzen Doppelschlitze 161, 163 überstreichen nur ein kleines Flächenstück der Gewebeoberfläche und ermitteln dabei die örtlichen Abweichungen derselben, während die langen Doppelschlitze 162, 164 für die Bildung des Mittelwertes der Leuchtstärkewerte eines grösseren Teiles der Gewebeoberfläche benutzt werden. Die in den nachgeschalteten Vorverarbeitungsstufen 171, 172, 173, 174 – die im wesentlichen die in Fig. 8 gezeigten Elemente wie Optik 11, Wandler 12, 13, Differenzstufe 14, Tiefpass 7 und Schwellwertstufe 8 enthalten – sind an eine Matrix 18 angeschlossen, auf der alle Punkte des zuletzt verarbeiteten Abschnittes der Warenbahn 1, die potentiell zu einem Gewebefehler gehören, in Tabellenform gespeichert werden. Mittels eines Nachprozesses, der in einer Stufe 19 erfolgt, werden die in der Matrix 18 gespeicherten Daten analysiert und als Fehlersignal 21 ausgegeben.

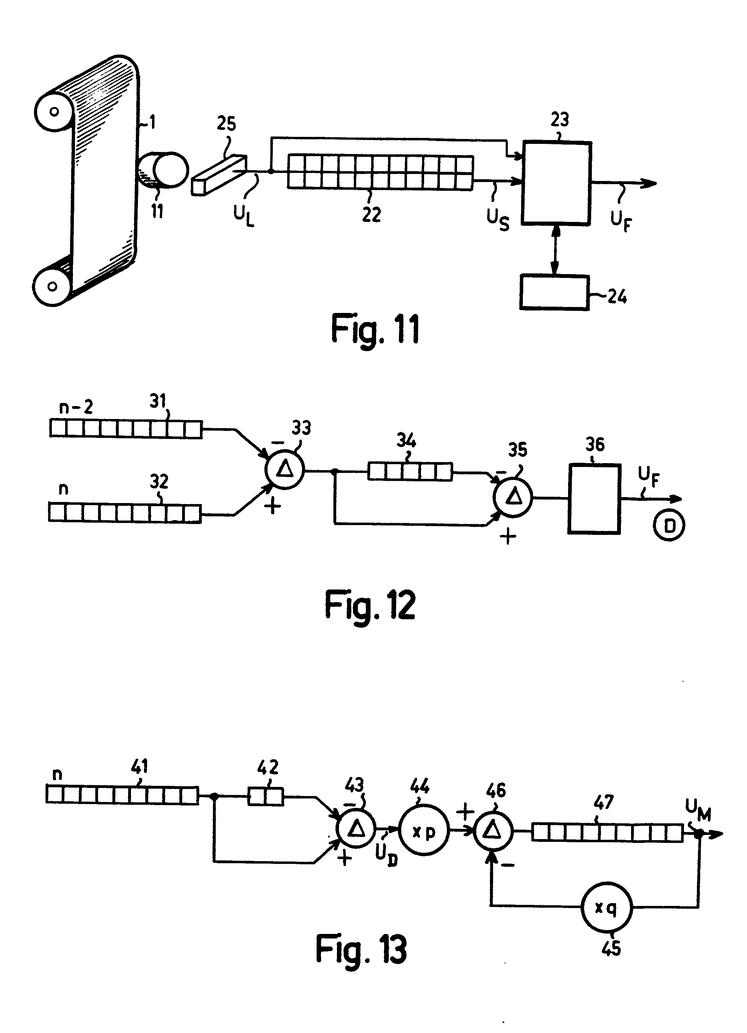

Eine elektronische Realisierung einer Bildfilterung mit den vorgeschlagenen Filtermasken kann beispielsweise mittels einer Anordnung gemäss Fig. 11 erfolgen. Die Warenbahn 1 wird über eine Optik 11 auf einen Zeilensensor 25 abgebildet. Am Ausgang des Zeilensensors 25 steht ein elektrisches Signal $U_L$ zur Verfügung, das den Leuchtstärkewerten der momentan abgebildeten Gewebezeile proportional ist. Mit Hilfe eines 2-Zeilen-Speichers 22, der beispielsweise ein Schieberegister sein kann, können jeweils die zwei zuletzt abgetasteten Zeilen gespeichert werden. Signal $U_L$ und Speicherinhalt $U_S$ sind an einen Filterprozessor 23 geführt, dessen Ausgang $U_F$, wie das Ausgangssignal der optischen Filter, einer Schwellwertstufe zugeführt ist. Dem Filterprozessor 23 ist noch ein Zwischenspeicher 24 zugeordnet.

Fig. 12 zeigt eine mögliche elektronische Realisierung einer horizontalen Filtermaske. Die Werte einer Abtastzeile n-2 (31) aus einem Zweizeilenspeicher 22 werden an einer ersten Differenzstufe 33 von den Werten der momentan gültigen Abtastzeile n (32) subtrahiert. In einem weiteren Schieberegister 34, dessen Stellenzahl k die Länge des Schlitzes in der Filtermaske 16 bestimmt, werden die Abtastwerte verzögert, so dass anschliessend jeder Abtastwert von seinem k-ten Vorgänger in einer zweiten Differenzstufe 35 subtrahiert werden kann. Eine fortlaufende Summation der Differenzwerte in einer Summierungsstufe 36 liefert das Filter-Ausgangssignal $U_F$. Dieses Filter-Ausgangssignal $U_F$ steht beispielsweise am Schaltpunkt D gemäss Fig. 8 an.

Die elektronische Realisierung einer vertikalen Doppelschlitzmaske erfolgt vorzugsweise nach einer Anordnung gemäss Fig. 13. Hier wird nur die augenblickliche Abtastzeile n (41) benötigt. Eine gegenseitige Verschiebung der Abtastwerte um zwei Stellen wird mit einem dritten Schieberegister 42 erzielt. Am Ausgang einer dritten Differenzstufe 43 steht die Signaldifferenz $U_D$ zwischen dem momentanen und dem vorletzten Abtastpunkt zur Verfügung. Mittels Multiplikatoren 44 (Faktor p) und 45 (Faktor q), einer vierten Differenzstufe 46 und einem vierten Schieberegister 47 von der Länge einer Abtastzeile n wird nach bekannten Verfahren für jeden Abtastpunkt ein fortlaufender Mittelwert $U_M$ gebildet. Durch die Wahl der Faktoren p und q wird die Länge der auf diese Weise realisierten Doppelschlitzmaske bestimmt. Diese rekursive Signalbehandlung ist eine gute Näherung der Mittelung senkrecht zur Abtastrichtung und vermeidet, dass für die Erzeugung bzw. Nachbildung langer vertikaler Schlitzmasken grosse Speicherbereiche aufgebaut werden müssen.

**Patentansprüche**

1. Verfahren zur automatischen Erkennung von Fehlern in Geweben und ähnlichen textilen Flächengebilden unter Auswertung von Leuchtstärkewerten zweier nebeneinanderliegender, aufeinanderfolgend abgetasteter, zueinander paralleler Bildzeilen mit nachfolgendem Vergleich von Leuchtstärkewerten, dadurch gekennzeichnet, dass die Mittelwerte der Leuchtstärken der nebeneinanderliegenden Bildzeilen erfasst und ein die jeweilige Differenz der Leuchtstärkemittelwerte darstellendes Signal gebildet und mit einem dem charakteristischen Mittelwert des abgetasteten Gewebes nachgeführten Schwellensignal verglichen wird, so dass in Abhängigkeit von diesem Vergleich ein binäres Schwarz-weiss-Bild des Gewebes erzeugt wird.

2. Vorrichtung zur Durchführung des Verfahrens nach Anspruch 1, bestehend aus einer Abtastoptik (20) mit Wandlern (12, 13, 25) zur zeilenweisen Erfassung aufeinanderfolgender Bildzeilen und einer Anordnung zum Vergleich von Leuchtstärkewerten, dadurch gekennzeichnet, dass die Abtastoptik zumindest ein Raumfilter (20) zur Abbildung von zwei zueinander parallel verlaufenden, rechteckigen Zonen aufweist, dass die Wandler (12, 13, 25) so angeordnet sind, dass deren Ausgangssignale den Leuchtstärkewerten der abgetasteten Zonen entsprechen, dass die den beiden Zonen zugeordneten, gegensinnig gewichteten Signale einer Differenzstufe (14) zugeführt sind, und dass der Ausgang der Differenzstufe mit einer Schwellwert-Vergleichseinheit (8) verbunden ist, die an einem weiteren Eingang mit einem charakteristischen Grauwertsignal des abgetasteten Gewebes gespeist ist.

3. Vorrichtung nach Anspruch 2, dadurch gekennzeichnet, dass zur Bildung des charakteristischen Grauwertsignals ein dem Raumfilter (20) nachgeschaltetes Tiefpassfilter (7) vorgesehen ist.

4. Vorrichtung nach Anspruch 2, dadurch gekennzeichnet, dass das Raumfilter (20) eine Maske (16) mit zwei parallel zueinander verlaufenden, rechteckförmigen Abtastschlitzen umfasst.

5. Vorrichtung nach Anspruch 2, dadurch gekennzeichnet, dass die beiden parallel zueinander verlaufenden Zonen in Schuss- bzw. Kettrichtung des zu untersuchenden Gewebes ausgerichtet sind.

6. Vorrichtung nach Anspruch 5, dadurch gekennzeichnet, dass die Länge der beiden zueinander parallelen Zonen der Raumfiltermaske (20) etwa gleich der Länge der gesuchten Texturabweichung ist.

7. Vorrichtung nach einem der vorhergehenden Ansprüche, dadurch gekennzeichnet, dass die Breite der beiden parallelen Zonen der Raumfiltermaske (20) einer oder mehreren Fadenbreiten entspricht.

8. Vorrichtung nach einem der vorhergehenden Ansprüche, dadurch gekennzeichnet, dass hinter jeder Raumfiltermaske (16) mindestens zwei optisch-elektrische Wandler (12, 13) angeordnet sind, von denen jeder nur Licht von einer der beiden parallelen Zonen der Raumfiltermaske erhält.

9. Vorrichtung nach einem der vorhergehenden Ansprüche, dadurch gekennzeichnet, dass die Raumfiltermaske aus Zeilensensoren (25) besteht und die nachfolgende Signalverarbeitung mittels fest verdrahteter bzw. programmierbarer Rechenschaltungen vorgenommen ist.

**Claims**

1. Method for the automatic recognition of faults in fabrics and similar areal textile structures by evaluating luminosity values of two adjacent, sequential, scanned, mutually parallel image lines with a subsequent comparison of luminosity values, characterised in that the mean values of the luminosities of the adjacent image lines are detected and a signal representing the respective difference of the mean luminosity values is formed and is compared with a threshold signal which is controlled to follow the characteristic mean value of the scanned fabric, so that a binary black/white image of the fabric is generated in dependence on this comparison.

2. Apparatus for carrying out the method of claim 1 consisting of an optical scanning system (20) with converters (12, 13, 25) for the linewise detection of sequential image lines and a means for comparing luminosity values, characterised in that the optical scanning system has at least one spatial filter (20) for forming an image of two rectangular zones which extend parallel to one another; in that the converters (12, 13, 25) are so arranged that their output signals correspond to the luminosity values of the scanned zones; in that the mutually weighted signals associated with the two zones are fed to a difference stage (14); and in that the output of the difference stage is connected to a threshold value comparator unit (8) which is fed at a further input with a characteristic grey value signal for the scanned fabric.

3. Apparatus in accordance with claim 2, characterised in that a low pass filter (7) connected after the spatial filter (20) is provided for forming the characteristic grey value signal.

4. Apparatus in accordance with claim 2, characterised in that the spatial filter (20) includes a mask (16) with two rectangular scanning slits which extend parallel to one another.

5. Apparatus in accordance with claim 2, characterised in that the two zones extending parallel to one another are aligned in the weft or warp direction of the fabric to be investigated.

6. Apparatus in accordance with claim 5, characterised in that the length of the two mutually parallel zones of the spatial filter mask (20) is approximately the same as the length of the deviation in texture that is sought.

7. Apparatus in accordance with one of the preceding claims, characterised in that the width of the two parallel zones of the spatial filter mask (20) corresponds to one or more thread widths.

8. Apparatus in accordance with one of the preceding claims, characterised in that at least two opto-electrical converters (12, 13) are arranged behind each spatial filter mask (16), of which each only receives light from one of the two parallel zones of the spatial filter mask.

9. Apparatus in accordance with one of the preceding claims, characterised in that the spatial filter mask consists of line sensors (25) and the subsequent signal processing is effected by means of hard wired or programmable computing circuits.

## Revendications

1. Procédé pour la reconnaissance automatique de défauts dans des tissus et configurations textiles analogues par évaluation de valeurs d'intensité lumineuse de deux lignes d'image juxtaposées, analysées séquentiellement, parallèles entre elles, avec comparaison subséquente de valeurs d'intensité lumineuse, caractérisé en ce qu'on détecte les valeurs moyennes des intensités lumineuses des lignes d'image juxtaposées et ce qu'on forme un signal représentant la différence respective des valeurs moyennes d'intensité lumineuse et en ce qu'on compare à un signal de seuil asservi à la valeur moyenne caractéristique du tissu analysé, de façon à créer une image noir et blanc binaire du tissu en fonction de cette comparaison.

2. Dispositif en vue de la mise en œuvre du procédé selon la revendication 1, se composant d'une optique d'analyse (20) avec des transducteurs (12, 13, 25) en vue de la détection par lignes de lignes d'image successives et d'un dispositif en vue de la comparaison de valeurs d'intensité lumineuse, caractérisé en ce que l'optique d'analyse comporte au moins un filtre spatial (20) en vue de la représentation de deux zones rectangulaires, s'étendant parallèles entre elles, en ce que les transducteurs (12, 13, 25) sont disposés de sorte que leurs signaux de sortie correspondent aux valeurs d'intensité lumineuse des zones analysées, en ce que les signaux pondérés de signes contraires, associés aux deux zones, sont appliqués à un étage de différence (14) et en ce que la sortie de l'étage de différence est reliée à une unité de comparaison (8) de valeur de seuil, qui est alimentée sur une autre entrée par un signal de valeur de gris caractéristique du tissu analysé.

3. Dispositif selon la revendication 2, caractérisé en ce qu'en vue de la formation du signal de valeur de gris caractéristique est prévu un filtre passe-bas (7) disposé en aval du filtre spatial (20).

4. Dispositif selon la revendication 2, caractérisé en ce que le filtre spatial (20) comprend un masque (16) muni de deux fentes d'analyse rectangulaires, s'étendant parallèlement entre elles.

5. Dispositif selon la revendication 2, caractérisé en ce que les deux zones s'étendant parallèles entre elles sont alignées sur la direction de trame et de la direction de chaîne, respectivement, du tissu à étudier.

6. Dispositif selon la revendication 5, caractérisé en ce que la longueur des deux zones parallèles entre elles du masque de filtre spatial (20) est approximativement égale à la longueur de l'écart de texture recherché.

7. Dispositif selon une des revendications précédentes, caractérisé en ce que la largeur des deux zones parallèles du masque de filtre spatial (20) correspond à une ou plusieurs largeurs de fibres.

8. Dispositif selon une des revendications précédentes, caractérisé en ce qu'en aval de chaque masque (16) du filtre spatial sont disposés au moins deux transducteurs (12, 13) opto-électriques, dont chacun reçoit uniquement de la lumière de l'une des deux zones parallèles du masque de filtre spatial.

9. Dispositif selon une des revendications précédentes, caractérisé en ce que le masque du filtre spatial se compose de capteurs de lignes (25) et le traitement de signal subséquent est assuré au moyen de circuits de calcul câblé de façon fixe ou programmables.

Fig. 1

Fig. 2

Fig. 3

Fig. 4

## Fig. 5

## Fig. 6

## Fig. 7

## Fig. 8

## Fig. 9

## Fig. 10

Fig. 11

Fig. 12

Fig. 13